# EUROPÄISCHE PATENTSCHRIFT

(11) **EP 1 706 876 B1**
(45) Veröffentlichungstag und Bekanntmachung des Hinweises auf die Patenterteilung: **26.03.2008**
(21) Anmeldenummer: 05700528.2
(22) Anmeldetag: 08.01.2005
(51) Int. Cl.: G21K 1/04

(54) **ROTOR**
ROTOR
ROTOR

(30) Priorität: 16.01.2004 DE 102004002326
(43) Veröffentlichungstag der Anmeldung: 04.10.2006
(73) Patentinhaber: Forschungszentrum Jülich GmbH, 52425 Jülich (DE)
(72) Erfinder: PROBST, Ulrich, 52080 Aachen (DE); KÄMMERLING, Hans, 52249 Eschweiler (DE); KOZIELEWSKI, Tadeusz, 52349 Düren (DE); STRAATMANN, Heidi, 52428 Jülich (DE); ROTTLÄNDER, Peter, 50825 Köln (DE); KOPPITZ, Thomas, 52080 Aachen (DE)
(86) Internationale Anmeldenummer: PCT/DE2005/000015
(87) Internationale Veröffentlichungsnummer: WO 2005/068988

(56) Entgegenhaltungen:
- WO-A-20/04075372
- DE-A1- 3 943 237
- GB-A- 884 061
- US-A- 4 176 563
- US-A- 4 600 301
- US-A- 4 909 600
- US-B1- 6 418 194
- US-B1- 6 434 219
- PATENT ABSTRACTS OF JAPAN Bd. 2003, Nr. 06, 3. Juni 2003 (2003-06-03) & JP 2003 037948 A (HONDA MOTOR CO LTD), 7. Februar 2003 (2003-02-07)
- COPLEY J R D: "ON THE USE OF MULTIPLE-SLOT MULTIPLE DISK CHOPPER ASSEMBLIES TO PULSE THERMAL NEUTRON BEAMS" NUCLEAR INSTRUMENTS & METHODS IN PHYSICS RESEARCH, SECTION - A: ACCELERATORS, SPECTROMETERS, DETECTORS AND ASSOCIATED EQUIPMENT, NORTH-HOLLAND PUBLISHING COMPANY. AMSTERDAM, NL, Bd. A273, Nr. 1, 1. Dezember 1988 (1988-12-01), Seiten 67-76, XP000022007 ISSN: 0168-9002
- P.M. GEHRING ET AL.: "Design of a high-flux backscattering spectrometer for ultra-high resolution inelastic neutron measurements" MAT.RES.SOC.SYMP.PROC.; NEUTRON SCATTERING IN MATERIALS SCIENCE II; PROCEEDINGS OF THE 1994 MRS FALL MEETING; BOSTON, MA, USA, NOV 28-DEC 1 1994, Bd. 376, 1995, Seiten 113-118, XP009051263 Materials Research Society, Pittsburgh, PA, USA ISSN: 0272-9172

## Beschreibung

Die Erfindung betrifft einen Rotor, insbesondere einen Rotor zur Aufnahme von optischern, magnetischen und/oder mechanischen Sensoren. Die Erfindung betrifft ferner die Verwendung eines solchen Rotors als Chopperrad in einem Rückstreuspektrometer.

### Stand der Technik

Als Rotor wird allgemein ein Läufer einer elektrischen Maschine bezeichnet. Bei Kraft- und Arbeitsmaschinen wird insbesondere.der mit der Welle verbundene Teil, der gegebenenfalls die für die Energieumwandlung wichtigen Bauteile trägt, verstanden. Diese Teile sind beispielsweise die Laufschaufeln bei Strömungsmaschinen oder die Wicklungen bei elektrischen Maschinen. Bei Verschluss- oder Rückstreuanordnungen werden beispielsweise Rotoren als Chopper eingesetzt, die verschiedenen Aktoren aufnehmen können. Unter Aktoren sind im Rahmen dieser Erfindung beispielsweise optische, magnetische oder mechanische Sensoren, Filter, Reflektoren oder Strömungen von moderierenden Medien zu verstehen.

Bei einem Rückstreuspektrometer bewirkt die prinzipielle gute Energieauflösung nachteilig einen Mangel an Neutronenintensität. Um die Intensität zu erhöhen, kann der Neutronenstrahl an sich sehr schnell bewegenden Kristallen reflektiert werden. Bei genügend hohen Geschwindigkeiten der Kristalle, beispielsweise 300 m/s, tritt dann die Phasenraumtransformation ein, bei der zu langsame Neutronen beschleunigt und zu schnelle Neutronen abgebremst werden. Auf diese Weise kann die Neutronenintensität nennenswert gesteigert werden.

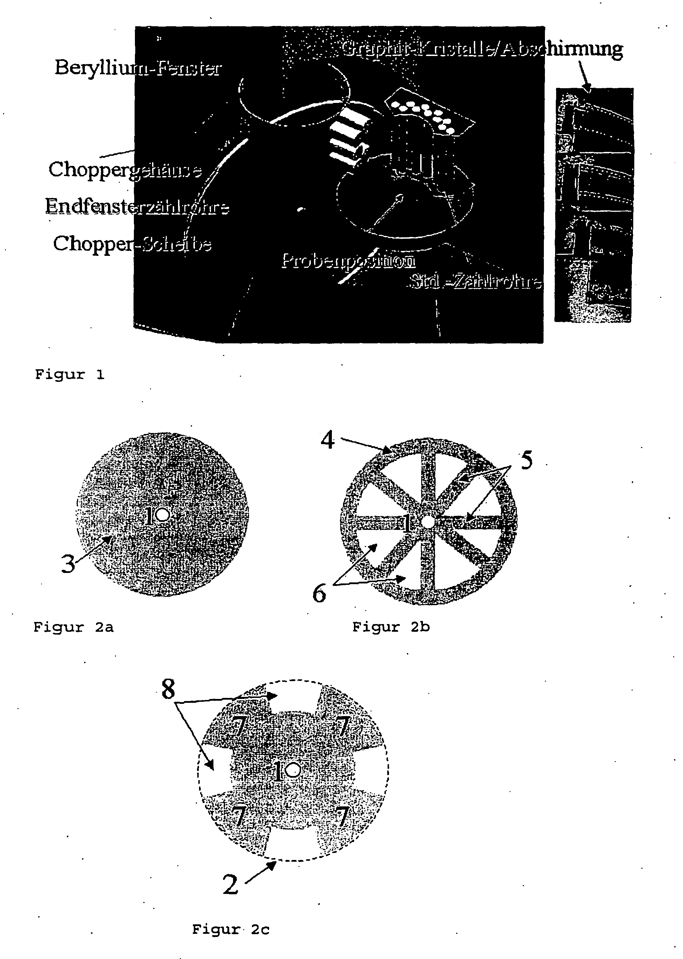

Bei dem Rückstreuspektrometer (RSSM) für den FRM-II in München wird beispielsweise ein Rotor als PST-Chopper eingesetzt, bei welchem es sich um eine massive kreisförmige Chopperscheibe handelt. Die äußere Umlaufkante ist in sechs gleichgroße Bereiche unterteilt. Jeder zweite Bereich ist mit Kristallen bestückt (siehe Figur 1). Die die Kristalle aufweisenden Bereiche (Kristallaufnahmen) der Chopperscheibe zeigen dabei einen größeren Radius, als die Bereiche ohne Kristalle. Die Bereiche ohne Kristalle übernehmen bei dieser Chopperscheibe somit die Funktion der Fenster zum Passieren der Neutronenstrahlen.

Bei den üblichen Rückstreuspektrometern ergibt sich aus der mittleren Neutronenenergie und der vorgegebenen Geometrie der Anordnung ein maximaler Durchmesser für eine Chopperscheibe von ca. 130 cm. Für eine Geschwindigkeit der Kristalle von ca. 300 m/s muss das Chopperrad mit einer Drehzahl von ca. 4800 U/min rotieren.

Aufgrund der hohen Fliehkraft resultierenden sehr hohe Spannungen und entsprechende Materialbelastungen. Die Konstruktion eines dafür geeigneten Rotors (Choppers) werden sehr aufwändig, da dieser eine entsprechend hohe mechanische Belastbarkeit sowie eine geringe und vor allem gleichförmige Verformung am Umfang bei möglichst geringem Eigengewicht aufweisen sollte.

Alternativ zu einer massiven Vollscheibe ist auch ein Speichenrad (Felgen-Speichen-Rotor) als Chopper denkbar. Vorteilhaft weist ein Speichenrad gegenüber einer Vollscheibe ein deutlich geringeres Gewicht auf. Die Speichen nehmen vorteilhaft die Radialspannung auf, während die Felge die Umfangspannung aufzunehmen vermag. Nachteilig hat sich jedoch herausgestellt, dass die unvermeidbaren maximalen Biegespannungen nur geringfügig unterhalb der Dauerfestigkeit des eingesetzten Werkstoffs liegen.

Mit Hilfe von auf Kreisbahnen geführten Aktoren und/oder sonstigen passiven Elementen können neben Neutronen auch stoffliche Partikel, wie beispielsweise Sand, Pulver oder Gase, gelenkt und beeinflusst werden.

Die Anforderungen, die innerhalb der Rückstreuspektrometer an ein Chopperrad gestellt werden, lassen sich auch allgemein auf Rotoren übertragen, die für hohe Umdrehungszahlen ausgelegt sind.

Das Dokument US-A-1 909 600 zeigt einen segmentierten Rotor mit Aussparungen, die durch eingebrachte Farbfilter teilweise ausgefüllt sind.

### Aufgabe und Lösung

Aufgabe der Erfindung ist es, einen leichten Rotor insbesondere zur Aufnahme von Aktoren zu schaffen, der auch bei hohen Drehzahlen eine nur geringe und vor allem eine möglichst gleichmäßige Verformung der Kreisbahnführung aufweist. Es ist ferner Aufgabe der Erfindung, einen solchen Rotor zu schaffen, der als Chopperscheibe in einem Rückstreuspektrometer eingesetzt werden kann und die korrekte Funktion der auf dem Rotor angebrachten Aktoren, insbesondere der Graphitkristalle ermöglicht.

Die Aufgaben der Erfindung werden gelöst durch einen Rotor mit der Gesamtheit an Merkmalen gemäß Hauptanspruch sowie durch die Verwendung eines Rotors gemäß Nebenanspruch. Vorteilhafte Ausführungen des Rotors und der Verwendung des Rotors insbesondere als Chopperscheibe finden sich in den jeweils rückbezogenen Ansprüchen.

### Gegenstand der Erfindung

Der erfindungsgemäße Rotor ist für den schnelllaufenden Einsatz im Vakuum oder verdünnten Gasen konzipiert worden.

Die spezielle Geometrie des Rotors bewirkt vorteilhaft eine deutliche Spannungsreduktion und in der Regel eine gleichmäßigere Verformung in den Bereichen Umfangs des Rotors im Vergleich zu herkömmlichen Rotoren.

Einerseits führt die Segmentierung des Rotors und die Aussparungen innerhalb der Rotorsegmente zu einer gewünschten Gewichtsreduktion, andererseits wird durch die spezielle Anordnung und Ausgestaltung der Aussparungen eine Optimierung der Verformung im Einsatz möglich. Insbesondere wird diese Wirkung bei hoher Fliehkraftentwicklung bei hohen Umfangsgeschwindigkeiten im Grenzbereich des Materials erzielt.

Der erfindungsgemäße Rotor hat insbesondere die Funktion Aktoren aufzunehmen und in einer Kreisbahn zu führen, die im folgenden Wirkkreis genannt wird. Beispielsweise wird der Rotor als Chopperrad in einem Rückstreuspektrometer eingesetzt. Bei einer Kreisbahnführung mit großem Wirkradius können sehr hohe Umfangsgeschwindigkeiten auftreten, die regelmäßig zu durch Fliehkraft verursachte hohe Spannungen führen.

Der erfindungsgemäße Rotor umfasst wenigstens ein an der Nabe angeordnetes Rotorsegment. Als Rotorsegment im Rahmen dieser Erfindung wird ein Teil einer Vollscheibe verstanden, der von der Verbindung mit der Nabe bis zum Wirkkreis reicht, aber keine durchgängige Felge aufweist. Bei einem Rotor mit mehren Segmenten sind diese durch nach außen offene Aussparungen getrennt. Die Segmente sind untereinander im Bereich der Nabe verbunden.

Das Rotorsegment selbst weist wenigstens eine abgeschlossene Aussparung auf, die derart angeordnet sind, dass das die Aussparung umgebende Material in Form von Speichen vorliegt..

Unter Speichen werden üblicherweise stabförmige Radteile verstanden, die eine Nabe und eine Felge verbinden. Im Rahmen dieser Erfindung soll der Begriff Speiche jedoch nicht nur auf radial stabförmige Ausführungen beschränkt sein. Unter Speichen im Sinne dieser Erfindung sind allgemein materialdurchgängige Bereiche von der Narbe bis zur äußeren Umfangsbegrenzung (Wirkkreis) des Rotorsegmentes zu verstehen. Die Geometrie der Aussparung basiert auf einem Kreis und weist eine stetig verlaufende Umfangslinie auf. Die typischen Geometrien der Aussparungen sind insbesondere Ovale oder Ellipsen. Die großen und glatten Verrundungsradien der Aussparungen minimieren die Randspannungen und gleichen sie an die Spannungen in den Speichen an.

Eine vorteilhafte Ausgestaltung des Rotors weist innerhalb eines Rotorsegments zwei geschlossene Aussparungen auf. Das Rotorsegment zeigt dann insbesondere eine III-förmige Struktur. Unter geschlossenen Aussparungen im Sinne dieser Erfindung sind ausdrücklich keine Bohrungen mit umfasst, die lediglich einer Gewichtsreduktion des Rotors dienen. Im Unterschied zu einem Speichen-Felgen-Rotor weist der erfindungsgemäße Rotor mit einem oder mehreren Rotorsegmenten keine durchgehende Felge auf.

Beim Betrieb eines Rotors mit nur einem Rotorsegment muss mit einem Gegengewicht entsprechend ausgewuchtet werden. Vorteilhafter ist daher eine Anordnung eines Rotors mit wenigstens zwei, drei oder mehr Rotorsegmenten, die regelmäßig oder auch unregelmäßig um die Nabe verteilt sein können.

Eine besonders vorteilhafte Ausgestaltung ist ein Rotor, bei dem die Rotorsegmente gleich verteilt um die Nabe angeordnet sind. Wichtig ist in jedem Fall, dass bei der Anordnung regelmäßig keine Unwucht auftritt. Die einzelnen Rotorsegmente können dabei sowohl verschiedene als auch identische Formen aufweisen. Insbesondere hat sich eine jeweils spiegelsymmetrische Form für die einzelnen Rotorsegmente als vorteilhaft herausgestellt.

Eine besondere Ausführungsform sieht einen Rotor mit Rotorsegmenten mit einer spiegelbildlichen III-förmigen Struktur. vor. Die drei Speichen eines III-Rotorsegments sind dabei weitgehend parallel angeordnet. Diese Ausgestaltung bewirkt vorteilhaft, dass vorwiegend Zug- und nur reduziert Biegespannungen auftreten, wobei die letztgenannten besonders kritisch sind.

Als Materialien für den Rotor können neben Metallen und seinen Legierungen auch Keramiken, Glas oder andere heute übliche Werkstoffe, wie beispielsweise Faserverbunde eingesetzt werden. Dies ist insbesondere deshalb möglich, weil die bei hohen Drehzahlen auch auftretenden Biegespannungen bei dem erfindungsgemäßen Rotor deutlich geringer ausfallen, als bei vergleichbaren Rotoren, die aus der Literatur bekannt sind.

Basierend auf dem Modell einer Scheibe gleicher Spannung kann der erfindungsgemäße Rotor ein vorteilhaftes Dickenprofil aufweisen, welches in Abhängigkeit von der gewählten Geometrie nochmals zu einer weiteren Reduktion der Spannungen und somit zu einer gleichmäßigeren Verformung während des Einsatzes des Rotors führt. Beispielsweise kann der Rotor ein sich radial verjüngendes Profil aufweisen. Vorteilhaft werden zusätzlich die Aussparungs- und Segmentränder in der Dicke weiter spannungsoptimiert, um sich dem Ideal einer Scheibe gleicher Spannung anzunähern.

Die Vorteile des erfindungsgemäßen, segmentierten Rotors sind im Folgenden noch einmal zusammengefasst.
- Im Verhältnis zu einem vergleichbar großen Rotor in Form einer Vollscheibe ist er deutlich leichter; dadurch ergibt sich auch ein geringerer Lagerungsaufwand.
- Er weist bei hohen Umdrehungsgeschwindigkeiten eine gleichmäßigere Verformung im Bereich der Kreisbahnführung im Verhältnis zu einem Felgen-Speichen-Rotor auf.
- Es werden größere Verrundungsradien möglich, die regelmäßig Spannungsspitzen verringen.
- Die Biegespannungen in Teilbögen der Felge, wie sie üblicherweise bei einem Speichen-Felgen-Rotor auftreten, fallen beim segmentierten Rotor weg.
- Die Biegespannungen in den Speichen eines Speichen-Felgen-Rotors werden durch Neuanordnung in dem segmentierten Rotor deutlich reduziert; damit entsteht eine betont zugbelastete Form, die vorteilhaft auch andere Rotormaterialien wie Keramik oder Glas ermöglichen.

Mit diesem erfindungsgemäßen Rotor werden folgende Verbesserungen insbesondere im Grenzbereich der Materialbelastbarkeit gegenüber dem Stand der Technik erzielt:
- bei gleichen Randbedingungen sind höhere Drehzahlen möglich,
- bei gleichen Randbedingungen wird der Sicherheitsfaktor gegenüber Versagen deutlich erhöht,
- die 1. Eigenfrequenz steigt, wodurch allgemein die Lagerbelastungen besser kontrollierbar sind insbesondere Magnetlager besser steuerbar sind.

Damit ist es nunmehr möglich, Rotoren für hochtourig Einsätze zu schaffen, die einen deutlich höheren Sicherheitsfaktor aufweisen, als bislang möglich war, und/oder die deutlich höhere Drehzahlen erreichen könne, ohne dass die Sicherheit gegen Versagen herabgesetzt wird. Damit wird möglicherweise auch der Einsatz von Materialien möglich, die bislang aus Sicherheitsgründen nicht ohne weiteres in Frage kamen.

Eine besonders vorteilhafte Verwendung des erfindungsgemäßen Rotors ist der Einsatz in einem Rückstreuspektrometer. Hier werden Chopperscheiben mit einem Durchmesser bis zu 1,5 m benötigt, die je nach Radius Drehzahlen von mehr als 4000 pro Minute, insbesondere von mehr als mehr 5000 pro Minute aushalten müssen, um beispielsweise eine erforderliche Umfangsgeschwindigkeit von mehr als 300 m/s zu erreichen. Es sind für die Zukunft aber auch schon Scheibendurchmesser bis zu 4 m und Umfangsgeschwindigkeiten von bis zu 600 m/s angedacht.

### Spezieller Beschreibungsteil

Nachfolgend wird der Gegenstand der Erfindung anhand eines Ausführungsbeispiels sowie von Figuren näher erläutert, ohne dass der Gegenstand der Erfindung dadurch beschränkt wird. Es zeigen die
- Figur 1:: Chopperanordnung des Rückstreuspektrometers (RSSM) für den FRM-II Reaktor in München
- Figur 2:: Darstellung bekannter Rotoren, insbesondere
a) Rotor als Vollscheine,
b) Rotor als Felgen-Speichenrad,
c) Segmentierter Rotor ohne Felge.
- Figur 3:: Ausführungsformen des erfindungemäßen Rotors mit
a) einem symmetrischen Rotorsegment,
b) zwei gleichförmig um eine Nabe angeordneten symmetrischen Rotorsegmenten,
c) drei gleichförmig um eine Nabe angeordneten symmetrischen Rotorsegmenten.

Für die Figuren gilt die nachfolgende Legende:
- 1: Nabe
- 2: fiktiver Kreisumfang (Wirkkreis)
- 3: Vollscheibe
- 4: Felge
- 5: Speichen
- 6: abgeschlossene Aussparungen
- 7: Rotorsegment
- 8: nach außen hin offene Aussparungen

In der **Figur 1** ist die Chopperanordnung des Rückstreuspektrometers (RSSM) für den FRM-II Reaktor in München dargestellt. Deutlich zu erkennen ist die Choppervollscheibe. An deren äußerem Rand sind segmentweise die Graphitkristalle mit einer entsprechenden Abschirmung angeordnet.

Die **Figur 2** zeit schematisch Rotoren, wie sie aus dem Stand der Technik bekannt sind. In Figur 2 a) ist ein Rotor aus Vollmaterial als eine Vollscheibe 3 dargestellt. Der Rotor ist üblicherweise an einer Nabe 1 angeordnet. In Figur 2b) ist ein typisches Felgen-Speichenrad mit einer durchgehenden Felge 4 dargestellt, welches ebenfalls ein Rotor ist. Anstelle des Vollmaterials sind eine Vielzahl von einzelnen geschlossenen Aussparungen 6 vorgesehen, die radialsymmetrisch angeordnet sind. Zwischen den Aussparungen sind jeweils die Speichen angeordnet. Die in Figur 2c) gezeigte Ausführungsform kann ebenfalls als ein Rotor angesehen werden. Dieser Rotor zeigt keine geschlossene Felge. Nach außen offene Aussparungen 8 trennen das Rotormaterial in einzelne Segmente 7, die in diesem Fall jedoch noch durch eine massive Scheibe mit dem Radius r zusammengehalten werden.

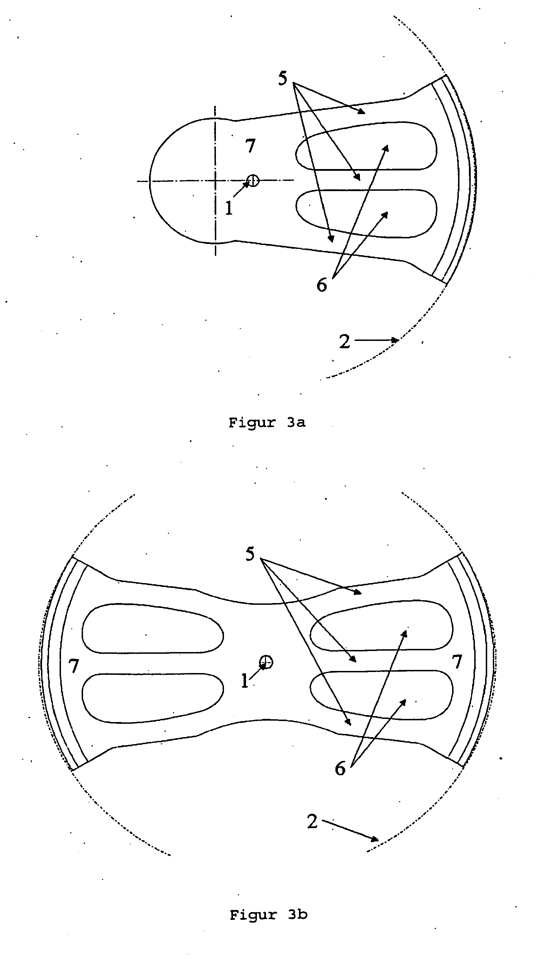

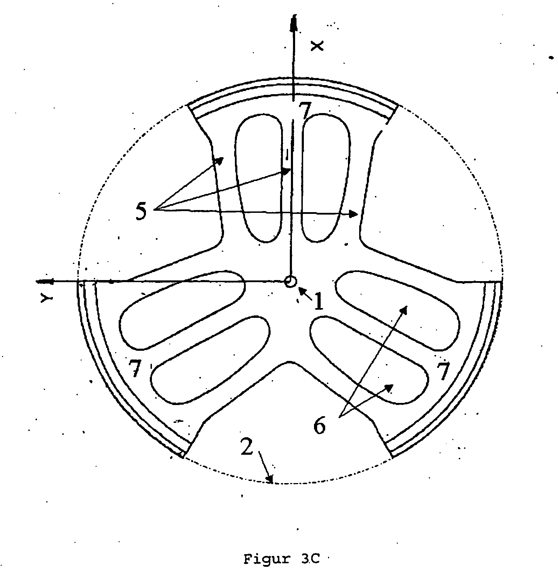

In **Figur 3** sind demgegenüber verschiedene Ausführungsformen der Erfindung dargestellt. Die dargestellten Rotorsegmente 7 sind jeweils aus Vollmaterial und weisen jeweils wenigstens zwei Aussparungen 6 auf. Die Aussparungen 6 sind derart angeordnet, dass das verbleibende Material des Rotorsegments 7 die Struktur von drei Speichen 5 aufweist. Unter Speichen sind die materialdurchgängigen Bereiche von der Nabe 1 bis zum äußeren Rand des Rotorsegments (Wirkkreises) 2 zu verstehen. Die in den Figuren 3a) bis 3c) gezeigten Rotorsegmente 7 weisen jeweils eine Spiegelsymmetrie auf, wobei die Spiegelachse stets durch die Nabe verläuft.

**Figur 3a** zeigt ein Ausführungsbeispiel des erfindungsgemäßen Rotors mit nur einem Rotorsegment. Der Rotor weist zum Ausgleich des Gewichtes des einen Rotorsegments in diesem Fall ein Gegengewicht auf der anderen Seite der Nabe auf.

In **Figur 3b** ist ein Rotor mit zwei Rotorsegmenten dargestellt. Diese können, müssen aber nicht symmetrisch um die Nabe angeordnet sein. In dem in 3b9 gezeigten Ausführungsbeispiel sind die einzelnen Rotorsegmente gleichmäßig, das heißt um 180 ° versetzt um die Nabe angeordnet. Da es sich um identische Rotorsegmente handelt, ist kein Ausgleichsgewicht erforderlich.

Gleiches gilt für den Rotor in der **Figur 3c****).** Die drei identischen Rotorsegmente sind jeweils um 120° versetzt um die Nabe angeordnet.

## Patentansprüche

1. Rotor für den schnelllaufenden Einsatz geeignet und optimiert bezüglich Fliehkraft, d.h. Wirkradius und Drehzahl sowie Grenzbereich der Materialbelastung, mit wenigstens einem Rotorsegment (7), das ein Teil einer Vollscheibe ist und von der Verbindung mit der Nabe (1) bis zum Wirkkreis (2) reicht, wobei der Rotor keine durchgängige Felge aufweist und das Rotorsegment (7) wenigstens eine abgeschlossene Aussparung (6) zur Verringerung der bei einem Einsatz des Rotors auftretenden Spannungen aufweist, **gekennzeichnet dadurch, daß** die Geometrie der Aussparung (6) auf einem Kreis basiert und eine Umfangslinie aufweiset, die stetig mit glatten Verrundungsradian verläuft.

2. Rotor nach Anspruch 1, bei dem das Segment wenigstens zwei abgeschlossene Aussparungen derart aufweist, dass das die Aussparungen umgebende Material in Form von drei Speichen (5) vorliegt.

3. Rotor nach einem der Ansprüche 1 bis 2, bei dem das Rotorsegment (7) eine Spiegelsymmetrie aufweisen, deren Spiegelachse durch die Nabe (1) verläuft.

4. Rotor nach einem der Ansprüche 1 bis 3, bei dem die Speichen (5) eines Rotorsegmentes (7) weitgehend parallel angeordnet sind.

5. Rotor nach einem der Ansprüche 1 bis 4, bei dem das Rotorsegment (7) jeweils an seinem äußeren Ende kreissegmentförmig ausgebildet ist.

6. Rotor nach einem der Ansprüche 1 bis 5, mit wenigstens drei Rotorsegmenten (7).

7. Rotor nach einem der Ansprüche 1 bis 6, bei dem die Rotorsegmente (7) gleichmäßig verteilt um die Nabe (1) angeordnet sind.

8. Rotor nach einem der Ansprüche 1 bis 7, bei dem die Rotorsegmente (7) jeweils identisch sind.

9. Rotor nach einem der Ansprüche 1 bis 8, bei dem die Rotorsegmente (7) mit einem spannungsoptimierten radialen Dickenprofil ausgebildet sind.

10. Rotor nach einem der Ansprüche 1 bis 9 mit einem Wirkradius von mehr als 500 mm, insbesondere von mehr als 1000 mm.

11. Rotor nach einem der Ansprüche 1 bis 10, mit Rotorsegmenten (7) umfassend Metall, Keramik, Glas oder Verbundmaterialien.

12. Rotor nach einem der Ansprüche 1 bis 11, der für Umfangsgeschwindigkeiten von mehr als 300 m/s, insbesondere für mehr als 400 m/s geeignet ist.

13. Verwendung eines Rotors nach einem der Ansprüche 1 bis 12, zur Aufnahme von wenigstens einem Aktor.

14. Verwendung nach Anspruch 13 als Chopperscheibe zur Aufnahme wenigstens eines Graphitkristalls für ein Rückstreuspektrometer.

## Claims

1. Rotor suitable for quick running use and optimised regarding centrifugal force, that is working radius and speed, as well as the limits to material load, with at least one rotor segment (7), which is part of a complete disc and stretches from the connection with the hub (1) to the working circle (2), in which the rotor has no continuous rim and the rotor segment (7) has at least one closed recess (6) to reduce the stress occurring when the rotor is used, **characterised in that** the geometry of the recess (6) is based on a circle and has a circumferential line, which runs constantly with a smooth radius of use.

2. Rotor according to claim 1, in which the segment has at least two closed recesses in such way that the material surrounding the recesses is in the form of three spokes (5).

3. Rotor according to one of claims 1 to 2, in which the rotor segment (7) has mirror type symmetry, the mirror axis of which runs through the hub (1).

4. Rotor according to one of claim 1 to 3, in which the spokes (5) of a rotor segment (7) are arranged parallel to a large extent.

5. Rotor according to one of claims 1 to 4, in which the rotor segment (7) is made in the shape of a segment of a circle at its outer end.

6. Rotor according to one of claims 1 to 5 with at least three rotor segments (7).

7. Rotor according to one of claims 1 to 6, in which the rotor segments (2) are arranged distributed evenly around the hub (1).

8. Rotor according to one of claims 1 to 7, in which the rotor segments (7) are identical.

9. Rotor according to one of clams 1 to 8, in which the rotor segments (7) are made with a radial thickness profile, which is optimised for stress.

10. Rotor according to one of claims 1 to 9 with a working radius of more than 500 mm, particularly of more than 1000 mm.

11. Rotor according to one of claims 1 to 10 with rotor segments (7) including metal, ceramic, glass or bonded materials.

12. Rotor according to one of claims 1 to 11, which is suitable for circumferential speeds of more than 300 m/s, particularly for more than 400 m/s.

13. Use of a rotor according to one of claims 1 to 12 to take at least one actuator.

14. Use according to claim 13 as a chopper disc to take at least one graphite crystal for a backscatter spectrometer.

## Revendications

1. Rotor pour l'utilisation à grande vitesse approprié et optimisé en terme de la force centrifuge, c'est-à-dire du rayon d'action et de la vitesse de rotation ainsi que de la zone limite de la charge de matière, avec au moins un segment de rotor (7) qui est une partie d'un disque plein et qui s'étend de la liaison avec le moyeu (1) jusqu'au cercle utile (2), dans lequel le rotor ne comporte aucune jante accessible et le segment de rotor (7) comporte au moins un évidement fermé (6) pour la diminution des tensions apparaissant lors d'une utilisation du rotor, **caractérisé en ce que** la géométrie de l'évidement (6) est basée sur un cercle et comporte une ligne circonférentielle qui s'étend en continu avec des gradients d'arrondissement lisses.'

2. Rotor selon la revendication 1, dans lequel le segment comporte au moins deux évidements fermés de telle manière que le matériau entourant les évidements se présente sous orme de trois rayons (5).

3. Rotor selon l'une quelconque des revendications 1 à 2, dans lequel le segment de rotor (7) présente une symétrie inverse dont l'axe d'inversion passe à travers le moyeu (1).

4. Rotor selon l'une quelconque des revendications 1 à 3, dans lequel les rayons (5) d'un segment de rotor (7) sont disposés sensiblement parallèlement.

5. Rotor selon l'une quelconque des revendications 1 à 4, dans lequel le segment de rotor (7) est conçu en forme de segment de cercle à son extrémité extérieure.

6. Rotor selon l'une quelconque des revendications 1 à 5, avec au moins trois segments de rotor (7).

7. Rotor selon l'une quelconque des revendications 1 à 6, dans lequel les segments de rotor (7) sont répartis uniformément autour du moyeu (1).

8. Rotor selon l'une quelconque des revendications 1 à 7, dans lequel les segments de rotor (7) sont identiques.

9. Rotor selon l'une quelconque des revendications 1 à 8, dans lequel les segments de rotor (7) sont formés dans un profil d'épaisseur radial optimisé en tension.

10. Rotor selon l'une quelconque des revendications 1 à 9 avec un rayon utile de plus de 500 mm, en particulier de plus de 1000 mm.

11. Rotor selon l'une quelconque des revendications 1 à 10, avec des segments de rotor (7) comprenant du métal, de la céramique, du verre ou des matériaux compostes.

12. Rotor selon l'une quelconque des revendications 1 à 11, qui est approprié pour des vitesses circonférentielles de plus de 300 m/s, en particulier de plus de 400 m/s.

13. Utilisation d'un rotor selon l'une quelconque des revendications 1 à 12, pour recevoir au moins un actionneur.

14. Utilisation selon la revendication 13 sous forme de disque hacheur pour recevoir au moins un cristal au graphite pour un spectromètre à rétrodiffusion.
